# EUROPÄISCHE PATENTSCHRIFT

(11) **EP 0 886 467 B1**
(45) Veröffentlichungstag und Bekanntmachung des Hinweises auf die Patenterteilung: **03.11.1999**
(21) Anmeldenummer: 97915271.7
(22) Anmeldetag: 31.01.1997
(51) Int. Cl.: A01K 97/11

(54) **VORRICHTUNG ZUM AUSLÖSEN EINES ANGELRUTENANSCHLAGS**
DEVICE FOR TRIGGERING A FISHING ROD STOP
DISPOSITIF POUR DECLENCHER UNE BUTEE DE CANNE A PECHE

(30) Priorität: 14.03.1996 DE 29604762 U
(43) Veröffentlichungstag der Anmeldung: 30.12.1998
(73) Patentinhaber: Marcegaglia, Werner, D-58285 Gevelsberg (DE); Rüggeberg, Detlef, 58285 Gevelsberg (DE); Wojcik, Andreas, 58285 Gevelsberg (DE)
(72) Erfinder: Marcegaglia, Werner, D-58285 Gevelsberg (DE); Rüggeberg, Detlef, 58285 Gevelsberg (DE); Wojcik, Andreas, 58285 Gevelsberg (DE)
(74) Vertreter: Dörner, Lothar, Dipl.-Ing.
(86) Internationale Anmeldenummer: DE9700186
(87) Internationale Veröffentlichungsnummer: WO9733467

(56) Entgegenhaltungen:
- DE-A- 1 903 987
- FR-A- 1 247 056
- FR-A- 1 411 224
- FR-A- 2 188 948

## Beschreibung

Die Erfindung betrifft eine Vorrichtung zum Auslösen eines Angelrutenanschlags, bei der von einem Grundgehäuse eine Spannfeder aufgenommen ist, die an ihrem einen Ende mittels einer Stange an dem Grundgehäuse und an ihrem anderen Ende an einem Auslösebolzen befestigt ist, der in dem Grundgehäuse drehbar gelagert ist, mit dem ein Rutenhalter drehbar ist, wobei der Auslösebolzen hinter einen Spannbolzen faßt, der in vorgespanntem Zustand des Auslösebolzens mit Hilfe eines Haltebolzens arretiert ist, der mit einem Feinauslöser verbunden ist, der an seinem einen Ende eine Führung aufweist, durch die eine Angelschnur geführt ist.

Angelruten werden in der Regel beim Anbiß eines Fisches manuell betätigt. Dabei reißt der Angler die Angelrute nach hinten, um ein Entkommen des Fisches vom Angelhaken zu verhindern. Oftmals werden jedoch von einem Angler mehrere Angelruten eingesetzt. Dann ist nicht mehr gewährleistet, daß der Angler im Moment des Anbeißens eines Fisches die jeweilige Angel zur Hand hat, um durch Reißen der Angelrute nach hinten das Entkommen des Fisches zu verhindern.

Aus DE 36 27 830 A1 ist ein Schnurauslöser bekannt, bei dem die Angelschnur über einen Auslöser geführt ist, der beim Anbiß eines Fisches in Richtung der Angelrutenspitze gezogen wird und aufgrund eines an ihm befestigten Kontergewichtes um seinen an einem Gehäuse befindlichen Befestigungspunkt nach unten fällt. Dadurch wird ein unter Drehstab- oder Spiralfederkraft stehender Anschlag freigegeben. Dieser schwenkt aus und spannt die Angelschnur. Aus FR 1247056 A ist eine Vorrichtung zum Auslösen eines Angelrutenanschlags der Eingangs genannten Art bekannt, bei der als Auslösebolzen ein Winkelhebel vorgesehen ist. Bei den bekannten Vorrichtungen sind Funktionsteile außerhalb des Körpers angeordnet. Dies verhindert eine kompakte Bauweise. Außerdem sind Verschlechterungen der Eigenschaften der Angelrute die Folge, was insbesondere bei Wurfangeln zum Tragen kommt.

Hier will die Erfindung Abhilfe schaffen. Ihr liegt die Aufgabe zugrunde, eine Vorrichtung zum Auslösen eines Angelrutenanschlags zu schaffen, die automatisch arbeitet und die Wurfeigenschaften der verwendeten Angelruten nicht beeinflußt. Gemäß der Erfindung wird diese Aufgabe durch die Merkmale des Schutzanspruchs 1 gelöst.

Mit der Erfindung ist eine Vorrichtung geschaffen, die automatisch auf jeden Anbiß reagiert. Darüber hinaus führt das Auslösen der Vorrichtung zu einer Bewegung der gesamten Angelrute, was dem Reißen des Anglers bei manueller Betätigung der Angelrute vergleichbar ist. Außerdem ist die Vorrichtung leicht zu zerlegen und wartungsarm.

In Weiterbildung der Erfindung sind an der Vorrichtung Aufnahmen für Steckgabeln angeordnet. Mit Hilfe der Steckgabeln ist die Vorrichtung in den Uferboden einsteckbar. Damit ist das Abstützen der Angelrute mit Hilfe von Steinen und Ästen an der Uferböschung vermieden.

Ausgestaltungen der Erfindung sind in weiteren Unteransprüchen beschrieben. Ein Ausführungsbeispiel der Erfindung ist in der Zeichnung dargestellt und wird im folgenden näher beschrieben. Es zeigen:

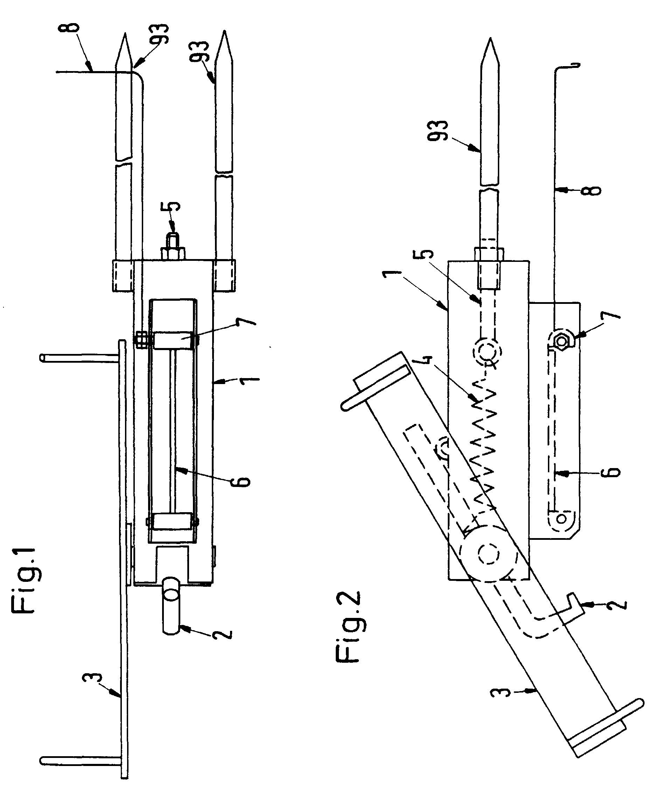

- Fig. 1: die Draufsicht einer Vorrichtung zum Auslösen eines Angelrutenanschlags in verkleinerter Darstellung;
- Fig. 2: eine Seitenansicht der in Fig. 1 dargestellten Vorrichtung;
- Fig. 3 bis 11: Einzelteile der Vorrichtung, nämlich

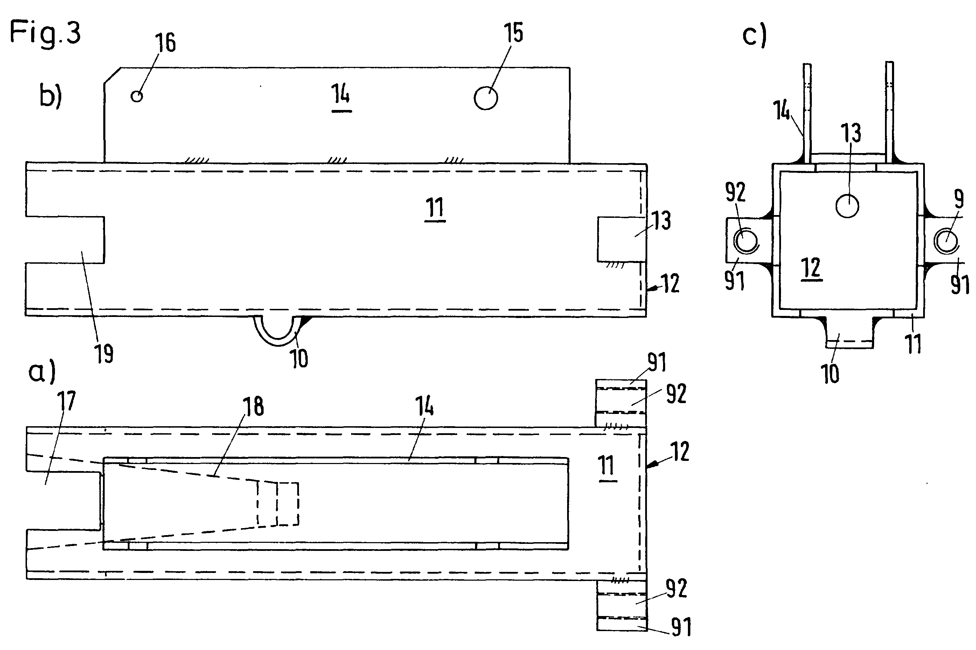

- Fig. 3: das Grundgehäuse;

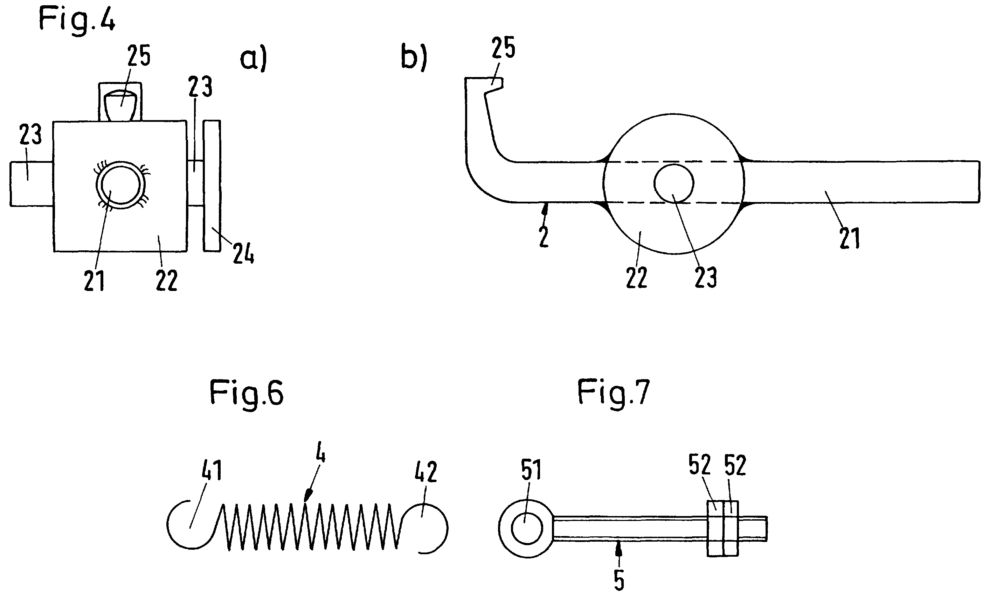

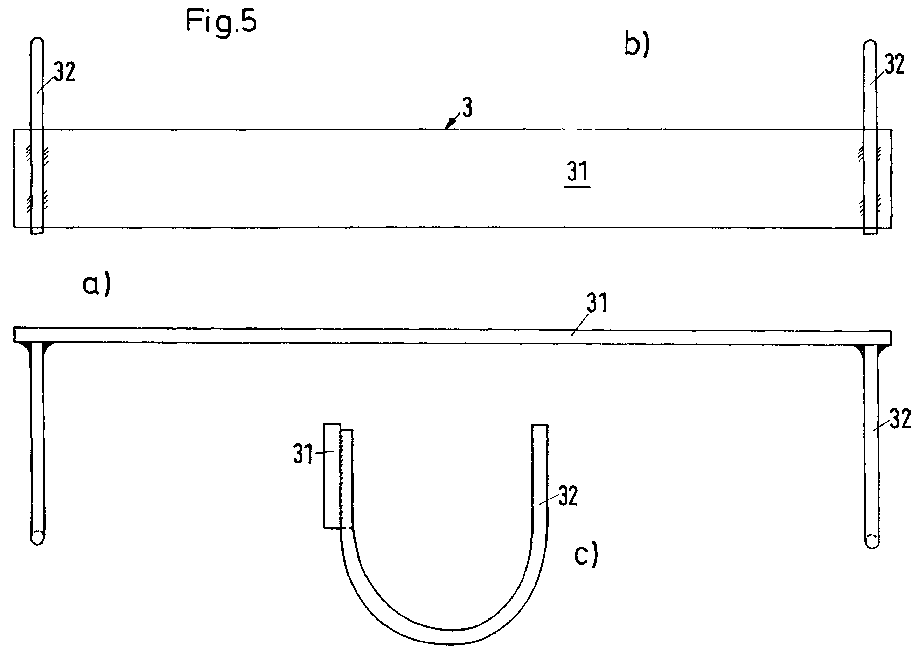

- Fig. 4: den Auslösebolzen;
- Fig. 5: den Rutenhalter;
- Fig. 6: die Spannfeder;
- Fig. 7: die Gewindestange;

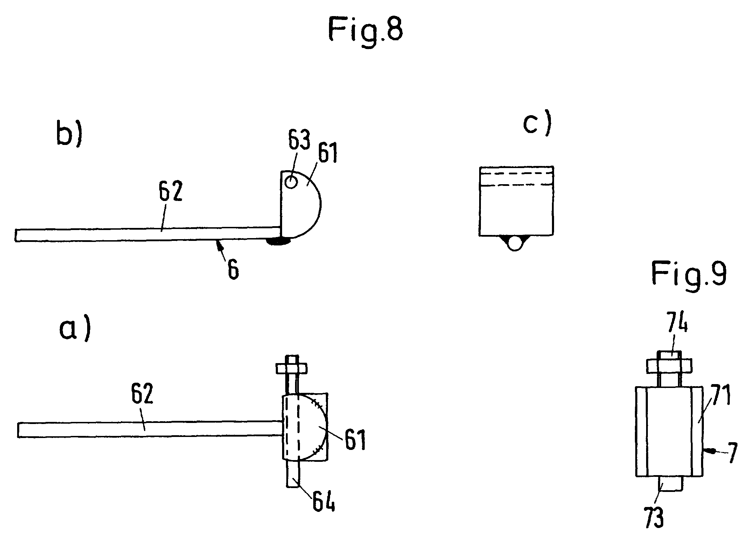

- Fig. 8: den Spannbolzen;
- Fig. 9: den Haltebolzen;

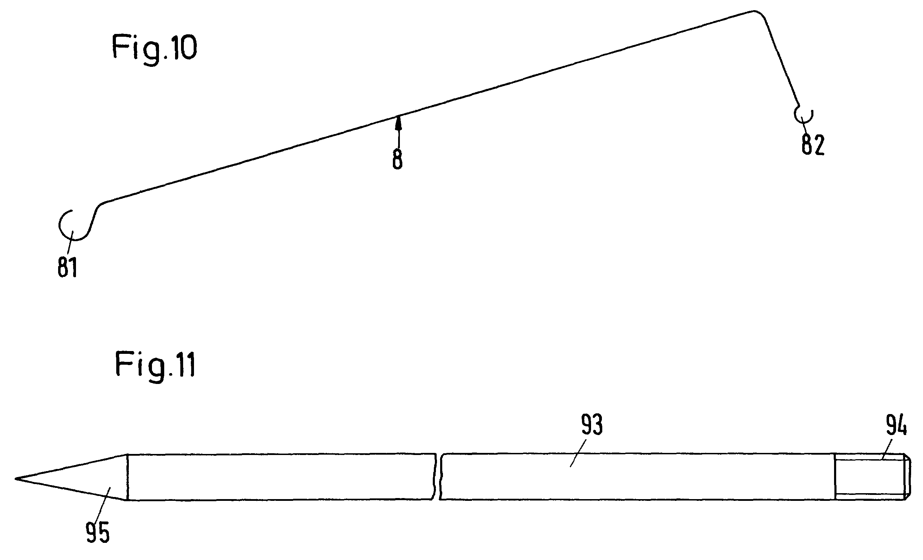

- Fig. 10: den Feinauslöser;
- Fig. 11: die Steckgabel;
wobei jeweils dargestellt sind bei
a) die Draufsicht,
b) die Vorderansicht,
c) die Seitenansicht von links und/oder
d) die Seitenansicht von rechts.

Die Vorrichtung zum Auslösen eines Angelrutenanschlags weist ein Grundgehäuse 1 auf. In dem Grundgehäuse 1 ist ein Auslösebolzen 2 drehbar gelagert, an dessen Drehachse einseitig ein Rutenhalter 3 angeordnet ist. An dem Auslösebolzen 2 ist eine Spannfeder 4 befestigt, die mittels einer Gewindestange 5 mit dem Grundgehäuse 1 verbunden ist. In dem Grundgehäuse 1 ist des weiteren parallel zu dem Auslösebolzen 2 ein Spannbolzen 6 drehbar gelagert, der in vorgespanntem Zustand der Vorrichtung mit Hilfe eines Haltebolzens 7 arretiert ist, der mit einem Feinauslöser 8 verbunden ist.

Das Grundgehäuse 1 - vgl. Fig. 3 - besteht aus einem Vierkantrohr 11, das auf einer Seite durch einen Boden 12 geschlossen ist. In den Boden ist eine Bohrung 13 eingebracht. Auf das Vierkantrohr 11 ist entlang seiner Längsachse zentriert eine U-förmige Schiene 14 aufgebracht, die kürzer und schmaler als das Vierkantrohr 11 ist. In die Schiene 14 sind seitlich jeweils zwei Bohrungen 15, 16 eingebracht. Auf der der Schiene 14 zugewandten Seite ist am offenen Ende des Vierkantrohrs 11 eine rechteckige Aussparung 17 vorgesehen, die bis zur Schiene 14 in das Vierkantrohr 11 hineinragt. Auf der der Schiene 14 abgewandten Seite weist das Vierkantrohr 11 eine trapezförmige Aussparung 18 auf, die etwa zu einem Drittel der Länge des Vierkantrohrs 11 in dieses hineinragt. Seitlich sind an dem offenen Ende des Vierkantrohrs 11 zwei rechteckige Aussparungen 19 vorgesehen, die etwa die gleiche Länge aufweisen wie die Aussparung 17. An der der Schiene 14 abgewandten Seite des Vierkantrohrs 11 ist am Ende der trapezförmigen Aussparung 18 ein Anschlag 10 angebracht.

Der Auslösebolzen 2 - vgl. Fig. 4 - besteht im wesentlichen aus einem an einem Ende abgewinkelten Stab 21. Etwa in der Mitte des Stabes 21 ist quer zu seiner Längsmittellinie eine Walze 22 angeordnet, deren Breite etwa gleich der Innenbreite des Vierkantrohrs 11 ist. An ihren Enden weist die Walze 22 zylindrische Absätze 23 auf. Die Durchmesser der Absätze 23 sind etwa gleich der Breite der Aussparungen 19. Auf einem der beiden zylindrischen Absätze 23 ist ein kreisförmiger Teller 24 angeordnet. An seinem abgewinkelten Ende weist der Stab 21 eine in Richtung der Walze 22 abgewinkelte Nase 25 auf. Auf dem Teller 24 des Auslösebolzens 2 ist der Rutenhalter 3 angebracht. Dieser besteht im wesentlichen aus einer rechteckigen Platte 31, an deren beiden Enden jeweils ein Bügel 32 angeordnet ist - vgl. Fig. 5 -.

Die Spannfeder 4 weist an ihren beiden Enden Schlaufen 41, 42 auf - vgl. Fig. 6 -. Mit Hilfe der einen Schlaufe 41 ist die Spannfeder 4 am Auslösebolzen 2 befestigt. Die andere Schlaufe 42 greift in einen an die Gewindestange 5 angeformten Ring 51 - vgl. Fig. 7 -. Die Gewindestange 5 ist darüber hinaus mit zwei Muttern 52 ausgestattet. Sie wird durch die Bohrung 13 des Grundgehäuses 1 gesteckt, wobei eine der beiden Muttern 52 sich innerhalb des Vierkantrohrs 11 befindet, die andere außerhalb.

Der Spannbolzen 6 besteht im wesentlichen aus einem Zylinder 61, der an einer Längsseite abgeflacht ist - vgl. Fig. 8 -. Die Länge des Zylinders 61 ist etwa gleich der Breite der Schiene 14 des Grundgehäuses 1. An der abgeflachten Seite des Zylinders 61 ist auf der Quer-Mittellinie ein Stab 62 an einem der beiden Enden der abgeflachten Fläche angebracht. Die Länge des Stabes 62 ist etwa gleich dem Abstand der Bohrungen 15, 16 des Grundgehäuses 1. Der Zylinder 61 weist auf der dem Stab 62 abgewandten Seite eine Längsbohrung 63 auf. In montiertem Zustand ist durch die Längsbohrung 63 ein Stift 64 gesteckt, dessen Länge größer ist als die des abgeflachten Zylinders 61. Der Stift 64 ist dann in der Bohrung 16 der Schiene 14 gelagert.

Der Haltebolzen 7 - vgl. Fig. 9 - besteht aus einem abgeflachten Zylinder 71, der die gleiche Form und die gleichen Abmessungen aufweist wie der abgeflachte Zylinder 61 des Spannbolzens 6. Der Zylinder 71 weist eine Längsbohrung 72 auf. In montiertem Zustand ist durch die Längsbohrung 72 ein Stift 73 gesteckt, der an seinem einen Ende ein Gewinde 74 aufweist. Der Haltebolzen ist dann mittels des Stiftes 73 in der Bohrung 15 des Grundgehäuses 1 gelagert. Auf das Gewinde 74 sind zwei Muttern 75 geschraubt, zwischen denen der Feinauslöser 8 mittels einer an einem seiner Enden befindlichen Öse 81 eingespannt gehalten ist - Fig. 10 -. Der Feinauslöser 8 besteht aus Draht und ist einmal rechtwinklig abgewinkelt. An dem der Öse 81 entgegengesetzten Ende weist der Feinauslöser 8 eine Führung 82 für die Angelschnur auf.

An dem geschlossenen Ende des Vierkantrohrs 11 des Grundgehäuses 1 sind mindestens zwei Aufnahmen 91 befestigt - vgl. Fig. 3 -. In die Aufnahmen 91 sind Gewinde 92 geschnitten. In die Gewinde 92 sind Stäbe 93, die an ihrem einen Ende ein Gewinde 94 aufweisen, eingeschraubt - vgl. Fig. 11 -. Auf der dem Gewinde 94 abgewandten Seite weisen die Stäbe 93 Spitzen 95 auf.

Im folgenden ist die Funktionsweise der Erfindung beschrieben: Der Auslösebolzen 2 ist mit Hilfe der Absätze 23 in den Aussparungen 19 des Grundgehäuses 1 gelagert. Er ist durch die Kraft der Spannfeder 4 gehalten. Zum Vorspannen wird der Auslösebolzen 2 gegen die Kraft der Spannfeder 4 um die durch die Absätze 23 gebildete Drehachse soweit gedreht, bis die Nase 25 hinter den abgeflachten Teil des Zylinders 61 des Spannbolzens 6 greift. Faßt die Nase 25 hinter den Zylinder 61, so wird mit Hilfe des Stabes 62 der Spannbolzen 6 um seine durch den Stift 64 gebildete Drehachse gedreht, bis der Stab 62 am Boden der Schiene 14 anliegt. Um den Spannbolzen 6 zu arretieren wird der Haltebolzen 7 um seine durch den Stift 73 gebildete Drehachse soweit gedreht, bis der abgeflachte Teil des Zylinders 71 vom Spannbolzen 6 abgewandt ist. Der Spannbolzen 6 stützt sich dann mit Hilfe des dem Zylinder abgewandten Ende des Stabes 62 an dem nicht abgeflachten Teil des Zylinder 71 des Haltebolzens 7 ab. In diesem Zustand steht der Spannbolzen 6 über den Auslösebolzen 2 unter der Krafteinwirkung der Spannfeder 4. Dies stellt den vorgespannten Zustand der Vorrichtung dar.

Ist die Vorrichtung derart vorgespannt, so wirft der Angler seine Rute aus und steckt sie auf den Rutenhalter 3. Er führt den Faden seiner Rute durch die Führung 82 des Feinauslösers 8. Wird nun an der Leine gezogen, so bewegt sich der Feinauslöser 8 und führt dabei eine Drehbewegung um die durch den Stift 73 gebildete Drehachse des Haltebolzens 7 aus. Durch diese Drehbewegung dreht sich ebenfalls der Haltebolzen 7, wodurch sich der abgeflachte Teil des Zylinders 71 dem Spannbolzen 6 zuwendet. Dadurch ist die Arretierung des Stabes 62 des Spannbolzens 6 gelöst, wodurch dieser sich durch die mittels des Auslösebolzens 2 auf ihn wirkende Federkraft um seine durch den Stift 64 gebildete Drehachse dreht. Im gleichen Moment wird die Nase 25 des Auslösebolzens 2 von dem Spannbolzen 6 freigegeben, wodurch sich dieser um seine durch die Absätze 23 gebildete Drehachse soweit dreht, bis der der Nase 25 abgewandte Teil des Stabes 21 gegen den Anschlag 10 schlägt. Die gleiche Drehbewegung führt parallel zu dem Spannbolzen 6 der auf ihm angebrachte Rutenhalter 3 aus, wodurch die in den Rutenhalter gesteckte Angelrute ebenfalls eine Drehbewegung ausführt, was der Anschlagbewegung bei manueller Betätigung der Angelrute gleichkommt. Der Fisch hat somit kaum die Möglichkeit, nach dem Anbiß wieder von der Angel zu gehen. Darüber hinaus wird durch das ruckartige Anschlagen ein Federn des vom Griff der Angelrute abgewandten Endes der Angelrute bewirkt, was zu einem Ziehen und Nachgeben der Angelschnur führt, wodurch der Fisch ermüdet wird.

## Patentansprüche

1. Vorrichtung zum Auslösen eines Angelrutenanschlags, bei der von einem Grundgehäuse (1) eine Spannfeder (4) aufgenommen ist, die an ihrem einen Ende mittels einer Stange an dem Grundgehäuse (1) und an ihrem anderen Ende an einem Auslösebolzen (2) befestigt ist, der in dem Grundgehäuse (1) drehbar gelagert ist, mit dem ein Rutenhalter (3) drehbar ist, wobei der Auslösebolzen (2) hinter einen Spannbolzen (6) faßt, der in vorgespanntem Zustand des Auslösebolzens (2) mit Hilfe eines Haltebolzens (7) arretiert ist, der mit einem Feinauslöser (8) verbunden ist, der an seinem einen Ende eine Führung (82) aufweist, durch die eine Angelschnur geführt ist, dadurch gekennzeichnet, daß der Auslösebolzen (2) im wesentlichen aus einem an einem Ende abgewinkelten Stab (21) gebildet ist, in dessen Mitte quer zu seiner Längsmittellinie eine Walze (22) angeordnet ist, an deren Enden zylindrische Absätze (23) vorgesehen sind, von denen einer mit einem kreisförmigen Teller (24) verbunden ist, auf dem der Rutenhalter (3) angebracht ist, wobei der Auslösebolzen (2) in vorgespanntem Zustand mit einer Nase (25) die an seinem der Spannfeder (4) abgewandten Ende angeordnet ist, hinter den Spannbolzen (6) faßt, der in dem Grundgehäuse (1) parallel zu dem Auslösebolzen (2) drehbar gelagert ist, und daß die Stange zur Befestigung der Spannfeder (4) in dem Grundgehäuse als Gewindestange ausgebildet ist.

2. Vorrichtung nach Anspruch 1, dadurch gekennzeichnet, daß an dem Grundgehäuse (1) Aufnahmen (91) für Stäbe (93) angeordnet sind.

3. Vorrichtung nach Anspruch 1, dadurch gekennzeichnet, daß der Stab (21) an seinem abgewinkelten Ende die Nase (25) aufweist, die ihrerseits in Richtung der Walze (22) abgewinkelt ist.

4. Vorrichtung nach einem der Ansprüche 1 bis 3, dadurch gekennzeichnet, daß dar Spannbolzen (6) von einem Zylinder (61) gebildet ist, der an einer Längsseite abgeflacht ist, an der auf der Quer-Mittellinie ein Stab (62) angebracht ist, und der auf dar dem Stab (62) abgewandten Seite eine Längsbohrung (63) aufweist, durch die im montiertem Zustand ein Stift (64) gesteckt ist, dessen Länge größer ist als die des abgeflachten Zylinders (61).

5. Vorrichtung nach einem der Ansprüche 1 bis 4, dadurch gekennzeichnet, daß der Haltebolzen (7) aus einem abgeflachten Zylinder (71) gebildet ist, der eine Längsbohrung (72) aufweist, durch die in montiertem Zustand ein Stift (73) gesteckt ist, der an seinem einen Ende ein Gewinde (74) aufweist, auf das zwei Muttern (75) geschraubt sind, zwischen denen der Feinauslöser (8) mittels einer an seinem anderen Ende befindlichen Öse (81) eingespannt gehalten ist.

## Claims

1. Device for triggering a fishing rod stop, in which a tension spring (4) is taken up by a basic housing (1), this tension spring being attached on its one end to the basic housing (1) by means of a bar and on its other end to a release bolt (2), which is mounted in the basic housing (1) to rotate, with which a rod retainer (3) is rotatable, whereby the release bolt (2) grips behind a tensioning bolt (6), which is locked in position in the release bolt's (2) pretensioned condition with the aid of a retaining bolt (7), connected to a precision trigger (8), which has a guide (82) on its one end, through said guide a fishing line is conducted, characterised in that a release bolt (2) is, basically, formed from a member (21) bent at one end, in the centre of which a roller (22) is appointed transversely to its longitudinal central axis, at the end of said roller cylindrical shoulders (23) being provided, of which one is connected with a circular plate (24), on which the rod retainer (3) is affixed, whereby the release bolt (2) grips behind the tensioning bolt (6), which is mounted to rotate in the basic housing (1) parallel to the release bolt (2), in pretensioned condition with a catch (25), appointed at its end facing away from the tension spring (4), and being further characterised by the bar to attach the tension spring (4) in the basic housing being formed as a threaded bar.

2. Device in accordance with Claim 1, characterised by receptacles (91) for members (93) being appointed on the basic housing (1).

3. Device in accordance with Claim 1, characterised by the member (21) having the catch (25) on its bent end, said catch, in turn, being bent in the direction of the roller (22).

4. Device in accordance with Claims 1 to 3, characterised by the tensioning bolt (6) being formed by a cylinder (61), being flattened on a length side, on which a member (62) is attached on the transverse central line, and which has a longitudinal bore hole (63) on the side facing away from the member (62), through said longitudinal bore hole a pin (64) is inserted in mounted condition, whose length is greater than that of the flattened cylinder (61).

5. Device in accordance with Claims 1 to 4, characterized by the retaining bolt (7) being formed from a flattened cylinder (71), which has a longitudinal bore hole (72), through which a pin (73) is inserted in mounted condition, which has, at one of its ends, a thread (74), on which two nuts (75) are screwed, between which the precision trigger (8) is retained in clamped condition by means of an eyelet (81), located on its other end.

## Revendications

1. Dispositif pour déclencher une butée de canne à pêche, canne dans laquelle un boîtier de base (1) loge un ressort tendeur (4) qui à l'une de ses extrémités est relié au boîtier de base (1) par le biais d'une tige et à l'autre de ses extrémités est fixé à un goujon déclencheur (2) monté en appui tournant dans le boîtier de base (1), goujon grâce auquel tourne un porte-canne (3), le goujon déclencheur (2) prenant derrière un goujon tendeur (6) qui, lorsque le goujon déclencheur (2) est à l'état précontraint, est verrouillé au moyen d'un goujon de retenue (7), lequel est relié à un déclencheur de précision (8) présentant à l'une de ses extrémités un guide (82) par lequel circule le fil de la canne à pêche, caractérisé en ce que le goujon déclencheur (2) est essentiellement formé par un bâtonnet (21) coudé à une extrémité et au milieu duquel est disposé, transversalement à la ligne longitudinale médiane de ce bâtonnet, un rouleau (22) à l'extrémité duquel sont prévus des segments cylindriques (23) dont l'un est relié à un plateau circulaire (24) sur lequel est fixé le porte-canne (3), le goujon déclencheur (2) en l'état précontraint venant prendre derrière le goujon tendeur (6) au moyen d'une saillie (25) disposée sur son extrémité opposée au ressort tendeur (4), lequel goujon tendeur est monté en appui tournant dans le boîtier de base (1), parallèlement au goujon déclencheur (2), et en ce que la tige de fixation du ressort tendeur (4) située dans le boîtier de base est configurée en tige filetée.

2. Dispositif selon la revendication 1, caractérisé en ce que des logements (91) recevant des bâtonnets (93) sont disposées contre le boîtier de base (1).

3. Dispositif selon la revendication 1, caractérisé en ce que le bâtonnet (21) présente à son extrémité coudée la saillie (25) qui à son tour est coudée en direction du rouleau (22).

4. Dispositif selon l'une des revendications 1 à 3, caractérisé en ce que le goujon tendeur (6) est formé par un cylindre (61) dont un côté longitudinal est aplati, côté sur lequel est fixé un bâtonnet (62) à hauteur de la ligne transversale médiane, et lequel cylindre présente sur le côté opposé au bâtonnet (62) un alésage longitudinal (63) dans lequel à l'état monté est enfichée une goupille (64) d'une longueur supérieure à celle du cylindre aplati (61).

5. Dispositif selon l'une des revendication 1 à 4, caractérisé en ce que le goujon de retenue (7) est formé par un cylindre aplati (71) présentant un alésage longitudinal (72) dans lequel à l'état monté est enfichée une goupille (73) présentant à l'une de ses extrémités un filetage (74) sur lequel sont vissés deux écrous (75) entre lesquels le déclencheur de précision (8) est retenu tendu par le biais d'un oeillet (81) situé à son autre extrémité.
